# NEUE EUROPÄISCHE PATENTSCHRIFT

(11) **EP 1 554 474 B2**
(45) Veröffentlichungstag und Bekanntmachung des Hinweises auf die Entscheidung über den Einspruch: **18.11.2009**
(45) Hinweis auf die Patenterteilung: 23.08.2006
(21) Anmeldenummer: 03808672.4
(22) Anmeldetag: 25.09.2003
(51) Int. Cl.: F01N 3/20, B01D 53/94

(54) **ABGASREINIGUNGSANLAGE EINER BRENNKRAFTMASCHINE UND VERFAHREN ZUR REINIGUNG DEREN ABGASE**
EXHAUST GAS CLEANING SYSTEM OF AN INTERNAL COMBUSTION ENGINE AND METHOD FOR CLEANING EXHAUST GASES
INSTALLATION D'EPURATION DES GAZ D'ECHAPPEMENT D'UN MOTEUR A COMBUSTION INTERNE ET PROCEDE POUR EPURER CES GAZ D'ECHAPPEMENT

(30) Priorität: 15.10.2002 DE 10247989
(43) Veröffentlichungstag der Anmeldung: 20.07.2005
(73) Patentinhaber: ROBERT BOSCH GMBH, 70442 Stuttgart (DE)
(72) Erfinder: MAYER, Thorsten, 67551 Worms (DE); DUETSCH, Heinrich, 71735 Eberdingen (DE); WALZ, Christian, 71229 Leonberg (DE)
(86) Internationale Anmeldenummer: PCT/DE2003/003196
(87) Internationale Veröffentlichungsnummer: WO 2004/036005

(56) Entgegenhaltungen:
- EP-A- 1 022 048
- EP-A- 1 052 009
- WO-A-02//43837
- DE-A- 19 755 703
- DE-C- 10 020 170
- US-B1- 6 200 535
- US-B1- 6 314 722
- PATENT ABSTRACTS OF JAPAN vol. 1995, no. 07, 31. August 1995 (1995-08-31) & JP 07 100335 A (NIPPON OIL CO LTD), 18. April 1995 (1995-04-18)
- BUNTING A: "SPRINGING THE TRAP" AUTOMOTIVE ENGINEER, MECHANICAL ENGINEERING PUBL.LTD. BURY ST.EDMUNDS, GB, Bd. 25, Nr. 5, Mai 2000 (2000-05), Seiten 73-74, XP000936087 ISSN: 0307-6490

## Beschreibung

Die Erfindung betrifft eine Abgasreinigungsanlage einer Brennkraftmaschine mit einer Vorrichtung zur selektiven katalytischen Reduktion. Die Erfindung betrifft ferner ein Verfahren zur Reinigung von Abgasen einer Brennkraftmaschine, bei dem ein Abgasstrom durch eine Vorrichtung zur selektiven katalytischen Reduktion geleitet wird.

### Stand der Technik

Zur Minderung der Stickoxidanteile in sauerstoffreichem Abgas, wie es insbesondere von Dieselbrennkraftmaschinen und von Brennkraftmaschinen mit Benzin-Direkteinspritzung emittiert wird, ist es bekannt, ein Reduktionsmittel in einen Abgastrakt einzuführen. Als Reduktionsmittel eignet sich bspw. NH₃, das als Gas in den Abgasstrom eingebracht werden kann. Bei dieser sog. selektiven katalytischen Reduktion (SCR, "selective catalytic reduction") wird das Ammoniak mit den im Abgas enthaltenen Stickoxiden selektiv zu molekularem Stickstoff und Wasser umgesetzt. Wegen seiner Toxizität eignet sich reines Ammoniakgas allerdings nicht für den Einsatz im Kraftfahrzeug. Ein bekanntes Verfahren sieht die Verwendung von wässriger Harnstofflösung als Reduktionsmittel vor. Hierbei wird erst durch Thermolyse und anschließende katalysierte Hydrolyse des Harnstoffs das eigentliche Reduktionsmittel Ammoniak freigesetzt.

Die bekannten SCR-Systeme weisen bei Abgastemperaturen unterhalb ca. 250 °C eine ungenügende Aktivität auf. Eine Vorschaltung eines Oxidationskatalysators sorgt einerseits für eine Minderung der Anteile an deaktivierend wirkenden Kohlenwasserstoffen und andererseits für eine Oxidation von NO zu NO₂, was insgesamt zu einer deutlichen Steigerung des NOₓ-Umsatzes bei Abgastemperaturen oberhalb von ca. 200 °C führt. Unterhalb von ca. 180 °C bietet das System aufgrund der relativ langen Zersetzungsdauer von Harnstoff zu NH₃ eine nur ungenügende Aktivität. Insbesondere beim Einsatz in PKW treten allerdings Phasen mit derart niedrigen Abgastemperaturen relativ häufig auf, was eine mittlere Katalysatortemperatur von weniger als 180 °C im sog. MVEG-Testzyklus verdeutlicht.

Um eine gute Verteilung des Reduktionsmittels im SCR-Katalysator zu gewährleisten, kann eine Mischstrecke von ca. 40 cm vorgesehen sein, die ggf. mit einer Mischeinrichtung versehen ist. Eine derartige Mischeinrichtung für eine Abgasreinigungsanlage ist in der älteren deutschen Patentanmeldung mit dem Aktenzeichen 101 31 803.0 beschrieben. Hierbei weist ein im Abgasrohr angeordneter Mischkörper eine Gasaufprallfläche sowie eine Strahlaufprallfläche auf, so dass aus der Brennkraftmaschine strömendes.Abgas auf die Gasaufprallfläche und quer zum Abgasstrom zuführbares Reduktionsmittel auf die Strahlaufprallfläche treffen kann.

Die EP 1174599 beschreibt eine Filteranordnung mit darin eingebrachten Katalysatorfolien, wobei ein Teil der Folien eine oxydationskatalytische Wirkung und ein anderer Teil der Folie eine Stickstoff-reduzierende Wirkung hat. Beide Typen von Katalysatorfolien werden mit Dosiermittel beaufschlagt.

Die EP 1052009 beschreibt Verfahren zur thermischen Hydrolyse und Dosierung von Harnstoff bzw. einer wässrigen Harnstofflösung, bei denen die Hydrolyse in einem stromaufwärts eines SCR-Katalysators angeordneten Hydrolysereaktor stattfindet.

### Vorteile der Erfindung

Bei einer Abgasreinigungsanlage zur Reinigung des Abgases einer Brennkraftmaschine ist wenigstens ein in einem Abgaskanal der Brennkraftmaschine angeordneter Oxidationskatalysator sowie wenigstens eine hinter diesem angeordnete Vorrichtung zur selektiven katalytischen Reduktion (SCR-Katalysator) vorgesehen. Erfindungsgemäß ist eine in dem wenigstens einen Oxidationskatalysator integrierte Zuführeinrichtung zur Zuführung eines Reduktionsmittels in den Abgasstrom der Brennkraftmaschine vorgesehen. Mit der erfindungsgemäßen Abgasreinigungsanlage können insbesondere relativ sauerstoffreiche Abgase von Dieselmotoren bzw. von Benzinmotoren Kraftstoffdirekteinspritzung wirksam von Stickoxiden (NOₓ) gereinigt werden. Mit Hilfe der Erfindung ist es möglich, die Baulänge des Abgasreinigungssystems deutlich zu verringern, wobei gleichzeitig eine gute Umsetzung des Reduktionsmittels im Abgasstrom gewährleistet ist. Die für eine gute Verteilung des Reduktionsmittels auf dem SCR-Katalysator üblicherweise notwendig Mischstrecke von ca. 40 cm kann deutlich reduziert werden, ohne dass ein unerwünschter Druckabfall im System auftritt. Der SCR-Katalysator muss aufgrund des Entfalls der üblicherweise notwendigen langen Mischstrecke nicht unbedingt im Unterbodenbereich des Fahrzeugs eingebaut werden, sondern kann gegebenenfalls näher zum Abgasauslass der Brennkraftmaschine gerückt werden. Auf diese Weise ergibt sich ein günstigerer Temperaturverlauf in der Abgasreinigungsanlage, der sich vorteilhaft auf die Reinigungswirkung auswirkt. Die Eindüsung des Reduktionsmittels erfolgt vorteilhafterweise direkt in den Oxidationskatalysator. Zu diesem Zweck ist eine Aussparung bzw. Ausbohrung des Oxidationskatalysators notwendig, da das Reduktionsmittel möglichst nicht mit dem Oxidationskatalysator in Kontakt kommen sollte, da ansonsten eine unerwünschte Oxydation zu molekularem Stickstoff, Stickstoffdioxid oder Stickstoffmonoxid stattfinden kann.

Eine Ausführungsform der Erfindung sieht vor, dass die Zuführeinrichtung eine Düse zur Zerstäubung des Reduktionsmittels aufweist.

Eine Ausgestaltung der Erfindung sieht eine der Zufiihreinrichtung nachgeordnete Mischvorrichtung zur besseren Verteilung des Reduktionsmittels im Abgasstrom vor. Auf diese Weise kann eine noch bessere Durchmischung des Reduktionsmittels mit dem Abgasstrom und damit eine noch bessere Reinigungswirkung des Abgases im nachfolgenden SCR-Katalysator erreicht werden.

Der Austritt der Düse kann wahlweise ungefähr mittig oder außermittig im Oxidationskatalysator angeordnet sein. Eine außermittige Eindüsung kann beispielsweise mit einem seitlichen Drall erfolgen, so dass trotzdem eine gute Durchmischung mit dem Abgasstrom gewährleistet ist. Falls die Verwendung von motornahen Katalysatoren nicht möglich ist, bzw. die Verminderung der HC- und CO-Emissionen nicht ausreicht, kann der Oxidationskatalysator wahlweise nicht über seine gesamte Länge, sondern nur stromabwärts der Eindüsstelle ausgespart sein. Somit werden auch ohne motornahen Oxidationskatalysator die Kohlenwasserstoffe und Kohlenmonoxide in ausreichendem Maße oxidiert. Zusätzlich profitiert die thermische Reduktionsmittelaufbereitung von der Exothermie am Oxidationskatalysator, welche durch die Oxidation der Kohlenwasserstoffe und Kohlenmonoxide auftritt.

Eine erfindungsgemäße Ausgestaltung sieht vor, dass der wenigstens eine Oxidationskatalysator mit der darin integrierten Zuführeinrichtung für das Reduktionsmittel ein erstes Gehäuse und dass die Vorrichtung zur selektiven katalytischen Reduktion ein daran anschließendes zweites Gehäuse aufweist. Zwischen beiden Gehäusen ist vorzugsweise ein Verbindungsrohr vorgesehen, das eine unterschiedliche Länge je nach baulichen Randbedingungen im Fahrzeug aufweisen kann. Vorzugsweise ist das Verbindungsrohr jedoch möglichst kurz ausgeführt, um eine Abkühlung des Abgasstroms vor Erreichen der Vorrichtung zur selektiven katalytischen Reduktion möglichst zu verhindern. Die Reinigungswirkung des SCR-Katalysators erreicht erst bei Temperaturen von ca. 300 °C befriedigende Größenordnungen.

Eine alternative Ausgestaltung sieht vor, dass der wenigstens eine Oxidationskatalysator und die Vorrichtung zur selektiven katalytischen Reduktion ein gemeinsames Gehäuse aufweisen. Dadurch wird gewährleistet, dass der mit Reduktionsmittel beaufschlagte Abgasstrom eine ideale Temperatur zur Umsetzung und NOₓ-Reduktion im SCR-Katalysator aufweist. Die bauliche Einheit der beiden Komponenten sorgt insgesamt für eine kompakte Bauweise und eine günstige Abgasreinigungswirkung.

Eine bevorzugte Ausgestaltung der Erfindung sieht vor, dass stromaufwärts des wenigstens einen Oxidationskatalysators im Abgasstrom der Brennkraftmaschine wenigstens ein weiterer Oxidationskatalysator angeordnet ist. Der wenigstens eine Oxidationskatalysator ist vorzugsweise in unmittelbarer Nähe der Brennräume der Brennkraftmaschine angeordnet und kann beispielsweise in jeweils einem weiteren Oxidationskatalysator- an jedem Abgasauslass eines jeden Brennraums der Brennkraftmaschine bestehen. Auf diese Weise kann der SCR-Katalysator vor einer Belegung mit Kohlenwasserstoffen und Kohlenmonoxid weitgehend geschützt werden. Die zusätzlichen motornahen Oxidationskatalysatoren, die auch als Zylinderkopf oder Vorturbolader-Katalysatoren bezeichnet werden können, sorgen für eine weitgehende. Umsetzung der im Abgas enthaltenen Kohlenwasserstoffe und des Kohlenmonoxids und verbessern somit deutlich die Reinigungswirkung des SCR-Katalysators.

Die Vorkatalysatoren können bevorzugt vor einer Abgasturbine eines Abgasturboladers angeordnet sein.

Als Reduktionsmittel kommen vorzugsweise alle ammoniakhaltigen bzw. ammoniakabspaltenden Substanzen in Frage, beispielsweise HWL, Ammoniumkarbamat, Ammoniakgas, etc.

Ein Verfahren zur Reinigung von Abgasen einer Brennkraftmaschine, insbesondere einer Brennkraftmaschine mit Selbstzündung und/oder mit Kraftstoffdirekteinspritzung, bei dem ein Abgasstrom durch wenigstens einen im Abgaskanal angeordneten Oxidationskatalysator und wenigstens einer dieser nachgeordneten Vorrichtung zur selektiven katalytischen Reduktion (SCR-Katalysator) geleitet wird, sieht erfindungsgemäß vor, dass dem Abgasstrom innerhalb des wenigstens einen Oxidationskatalysators ein Reduktionsmittel zugeführt wird. Durch die Eindüsung des Reduktionsmittels am Anfang der Katalysatorstrecke entfällt die bislang benötigte Mischstrecke. Auch ohne die Mischstrecke wird eine optimale Beaufschlagung des nachfolgenden SCR-Katalysators gewährleistet, da sich das Reduktionsmittel durch das Passieren der beiden Übergangstrichter der Abgasanlage ideal mit dem Abgasstrom vermischt. Somit wird ermöglicht, die Baulänge des Systems erheblich zu verringern und das Aufheizen der Katalysatoren zu beschleunigen. Weiterhin wird dadurch ein relativ motornaher Einbau des SCR-Katalysators ermöglicht, so dass der Katalysator unter Umständen im Motorraum untergebracht werden kann und die für die Erreichung einer schnellen Arbeitstemperatur ungünstigere Einbaulage im Unterbodenbereich des Fahrzeugs entfallen kann.

Eine Ausgestaltung des Verfahrens sieht vor, dass die Zuführung und/oder Zerstäubung des Reduktionsmittels mittels einer Düse erfolgt, die ungefähr mittig oder wahlweise außermittig innerhalb des Oxidationskatalysators angeordnet ist und die für eine feine Verteilung der Reduktionsmittel im Oxidationskatalysator sorgt. Die Aufbereitung des Reduktionsmittels entspricht dabei einer Neben- bzw.

Teilstromanordnung. Der Sprühkegel der Eindüsung kann wesentlich kleiner gehalten werden als bei bisher bekannten Systemen, was für die in den Katalysatoren ablaufenden Reaktionen von Vorteil ist. Die Eindüsestelle ist wesentlich näher am Motor und das Reduktionsmittel wird dadurch besser für die Hydrolyse auf dem SCR-Katalysator vorkonditioniert. Dies kann insbesondere bei niedrigen Katalysatortemperaturen von entscheidender Bedeutung sein. Zudem wird bei optimaler Auslegung die Baugröße des Oxidationskatalysators durch die Aussparung der Dosierstelle etwas geringer, was insbesondere bei Temperaturen um 300°C in Verbindung mit geringen Abgasgeschwindigkeiten die Gefahr des Auftretens zu hoher NO₂-Anteile vermindert. Die etwas geringere Baugröße hat dagegen im Kaltstart bzw. bei niedrigen Katalysatortemperaturen (geringe Motorlast) kaum einen negativen Einfluss auf den NO₂-Anteil.

Die Erfindung wird nachfolgend in bevorzugten Ausführungsbeispielen anhand der zugehörigen Zeichnungen näher erläutert. Dabei zeigt:
- Figur 1: eine schematische Darstellung einer Brennkraftmaschine mit einer Abgasnachbehandlungseinheit in einem Abgaskanal und
- Figuren 2 bis 6: verschiedene Ausführungsbeispiele der erfindungsgemäßen Abgasreinigungsanlage.

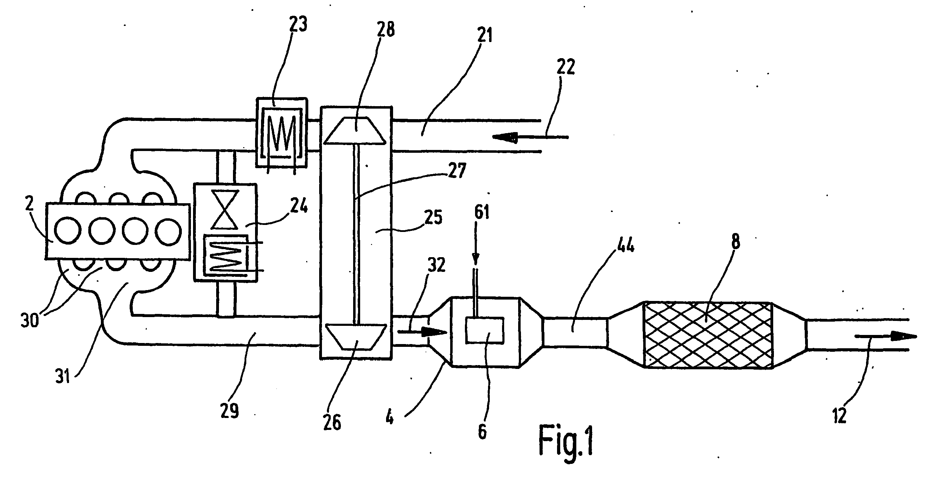

Figur 1 zeigt in einer schematischen Darstellung eine Brennkraftmaschine 2 mit einem Einlasskanal 21 zur Zufuhr von Frischgas 22 und mit einem Abgaskanal 29 mit darin angeordneten Abgasreinigungselementen. Im Einlasskanal 21 ist ein Ladeluftkühler 23 angeordnet, der jedoch nicht zwingend erforderlich ist. Weiterhin ist ein optionales Abgasrückführungssystem 24 zwischen Einlasskanal 21 und Abgaskanal 29 vorgesehen. Schließlich weist die Brennkraftmaschine einen Abgasturbolader 25 auf, der eine Abgasturbine 26 im Abgaskanal aufweist, die über eine Welle 27 mit einem Verdichter 28 im Einlasskanal 21 gekoppelt ist. Ein Auslass jedes Brennraums der Brennkraftmaschine 2 verfügt über einen Auslasskanal 30, die in einem nachfolgenden Sammler 31 auf den gemeinsamen Abgaskanal 29 zusammengeführt werden.

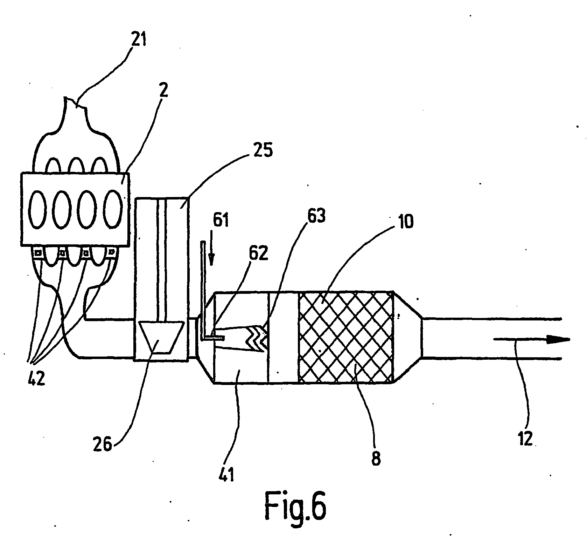

Im Abgaskanal 29 hinter der Abgasturbine 26 ist ein Oxidationskatalysator 4 vorgesehen, dem eine Vorrichtung zur selektiven katalytischen Reduktion 8 nachgeschaltet ist. Diese Vorrichtung zur selektiven katalytischen Reduktion wird im Folgenden auch als SCR-Katalysator bezeichnet. Zwischen Oxidationskatalysator 4 und SCR-Katalysator 8 ist ein Verbindungsrohr 44 vorgesehen, das ggf auch entfallen kann (vgl. Figur 6), so dass Oxidationskatalysator 4 und SCR-Katalysator 8 in einem gemeinsamen Gehäuse untergebracht sein können. Ein mit Schadstoffen belasteter Abgasstrom 32 verlässt den SCR-Katalysator als weitgehend gereinigtes Abgas 12, passiert anschließend vorzugsweise einen Schalldämpfer und wird nach diesem ins Freie geleitet.

Die gezeigte Anordnung aus Oxidationskatalysator 4 und SCR-Katalysator 8 wird teilweise auch als VR-System bezeichnet, wobei das "V" einen Vorkatalysator und das "R" den SCR-Katalysator bezeichnet. Im Vor- bzw. Oxidationskatalysator erfolgt die folgende Oxidationsreaktion:

NO + ½ O₂ → NO₂.

Dem SCR-Katalysator kann ggf. ein Harnstoffzersetzungskatalysator ("H") vorgeschaltet sein, in dem folgende Reaktion abläuft:

(NH₂)₂CO + H₂O→ 2 NH₃ + CO₂.

Im SCR-Katalysator ("R") selbst erfolgt die folgende selektive katalytische Reduktionsreaktion:

2 NH₃ + NO + NO₂ → 2 N₂ + 3 H₂O.

Dem SCR-Katalysator kann optional ein weiterer Oxidationskatalysator ("O") nachgeschaltet sein, in dem folgende Reaktion stattfindet:

2 NH₃ + 3/2 O₂ → N₂ + 3 H₂O.

Die durch einen Oxidationskatalysator modifizierten Systeme werden üblicherweise als VHRO-Systeme bezeichnet, wodurch die einzelnen Komponenten in ihrer Reihenfolge bezeichnet sind. Der Einsatz des "H"-Katalysators, welcher die Zersetzung des zugefüllten Harnstoffs beschleunigen soll, ist dabei als optional zu betrachten, da diese Aufgabe vom SCR-Katalysator übernommen werden kann. Auch die Verwendung des als NH₃-Sperrkatalysator fungierenden Oxidationskatalysators ("O") hinter dem SCR-Katalysator ist optional. Im vorliegenden Zusammenhang wird die Erfindung anhand des vereinfachten VR-Systems beschrieben, das wahlweise um die erwähnten Komponenten zum VHRO-System ergänzt werden kann.

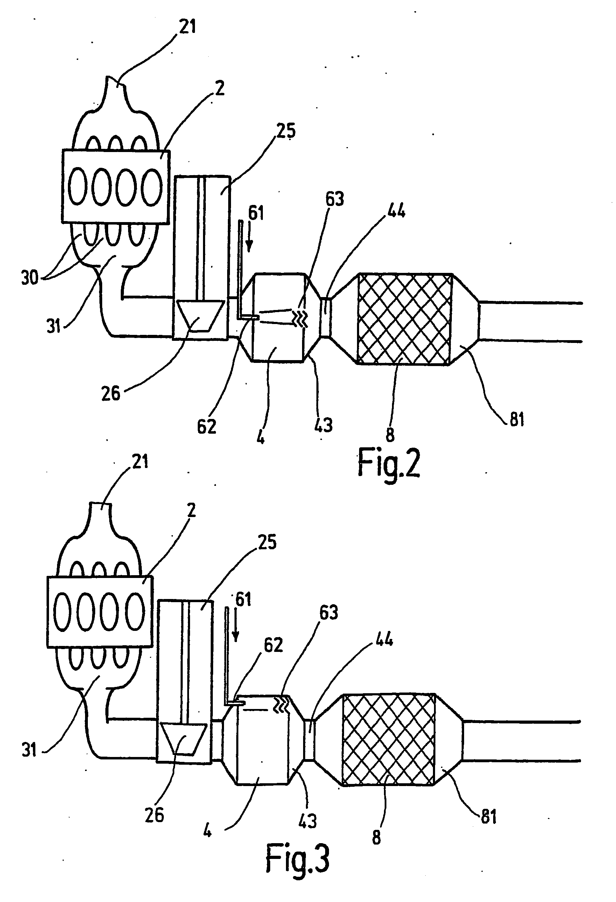

Im Oxidations-Katalysator 4 ist eine Zuführeinrichtung 6 zur Zufuhr von Reduktionsmittel 61 in den Abgasstrom 32 vorgesehen, die nachfolgend anhand der Figuren 2 bis 6 näher erläutert wird. Dort sind die erfindungsgemäßen Ausführungsbeispiele beschrieben, wobei erfindungsgemäß die Aufgabe der Beschleunigung der Zersetzung des Harnstoffs vom SCR-Katalysator übernommen wird.

Figur 2 zeigt ein erstes Ausführungsbeispiel der erfindungsgemäßen Abgasreinigungsanlage, bei der im Oxidationskatalysator 4 in ungefähr mittiger Position eine Düse 62 angeordnet ist, mittels derer das Reduktionsmittel 61 in den Oxidations-Katalysator 4 zerstäubt und auf diese Weise dem Abgasstrom 32 zugeführt wird. Hinter der Düse 62, in deren Sprühkegel oder leicht dahinter, kann eine Mischvorrichtung 63 vorgesehen sein, die jedoch wahlweise auch entfallen kann. Nach Passieren eines Verbindungsrohrs 44 treten die Abgase in den SCR-Katalysator 8 ein, in dem eine Umsetzung der Stickoxide zu molekularem Stickstoff unter Zugabe von NH₃ und Wasser erfolgt.

Figur 3 zeigt eine alternative Ausgestaltung der Anordnung der Düse 62, die sich hierbei außermittig im Oxidationskatalysator 4 befindet. Die Mischvorrichtung 63 befindet sich ebenfalls außermittig im Oxidationskatalysator 4, so dass eine gute Durchmischung des Reduktionsmittels 61 im Abgasstrom 32 erfolgen kann.

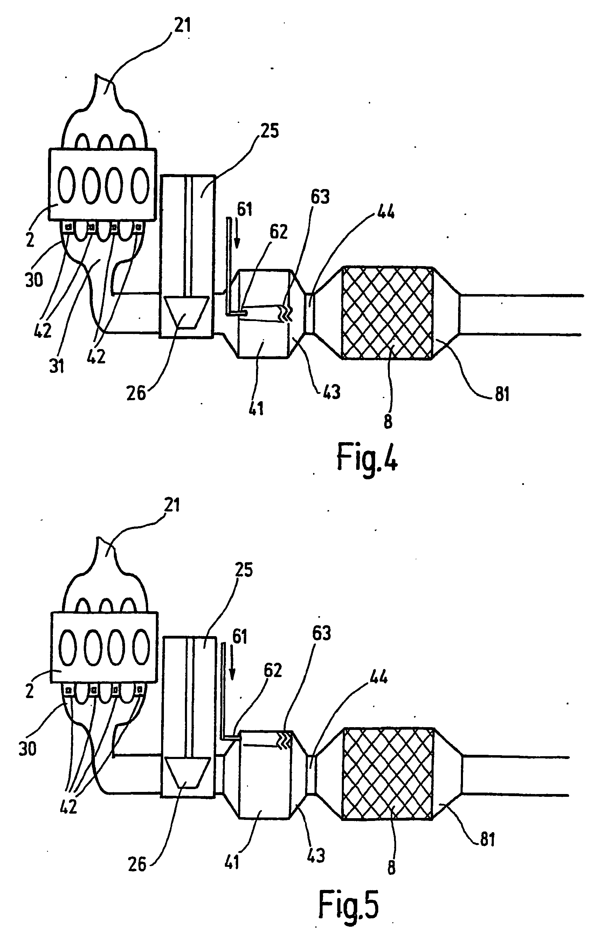

Figur 4 zeigt eine weitere alternative Ausgestaltung der erfindungsgemäßen Abgasreinigungsanlage, bei der jeweils in den Auslasskanälen 30 der Brennkraftmaschine 2 einzelne Oxidationskatalysatoren angeordnet sind, die hier als zweite Oxidationskatalysatoren 42 bezeichnet sind. Diese zweiten Oxidationskatalysatoren 42 sind als sogenannte Zylinderkopf- oder Vorturboladerkatalysatoren bekannt und sorgen dafür, dass der SCR-Katalysator 8 weitgehend vor einer Belegung mit Kohlenwasserstoffen und Kohlenmonoxid geschützt wird. Die Anordnung der Zuführeinrichtung 6 mit der mittig im ersten Oxidationskatalysator 41 angeordneten Düse 62 entspricht weitgehend der Ausführungsform gemäß Figur 2.

Figur 5 zeigt eine entsprechende Anordnung der zweiten Oxidationskatalysatoren 42 in den Auslasskanälen 30 der Brennkraftmaschine 2, wie dies im Ausführungsbeispiel gemäß Figur 4 vorgesehen ist. Die außermittige Anordnung der Zuführeinrichtung 6. mit der Düse 62 sowie der optionalen Mischvorrichtung entspricht der Ausführungsform gemäß Figur 3.

In den Ausführungsbeispielen gemäß den Figuren 1 bis 5 ist jeweils der erste Oxidationskatalysator 4 bzw. 41 in einem Gehäuse 43 angeordnet, das durch ein Verbindungsrohr 44 von einem Gehäuse 81 des SCR-Katalysators 8 getrennt ist. Die Ausgestaltung der Abgasreinigungsanlage gemäß Figur 6 zeigt ein integriertes Gehäuse 10, in dem entlang des Abgasstroms der erste Oxidationskatalysator 41 und diesem nachgeschaltet der SCR-Katalysator 8 angeordnet ist. Diese Bauweise führt zu einer äußerst kompakten Abgasreinigungsanlage, die zudem eine sehr effektive Abgasreinigung bewirkt, da die Abgase durch das entfallene Verbindungsrohr auf einem hohen Temperaturniveau bleiben. Die zweiten Oxidationskatalysatoren in den Auslasskanälen 30 der Brennkraftmaschine können bei diesem Ausführungsbeispiel mit dem integrierten Gehäuse 10 wahlweise auch entfallen (vgl. Figuren 2 und 3).

## Patentansprüche

1. Abgasreinigungsanlage zur Reinigung des Abgases einer Brennkraftmaschine, insbesondere einer Brennkraftmaschine mit Selbstzündung und/ oder mit Kraftstoffdirekteinspritzung, mit wenigstens einem in einem Abgaskanal der Brennkraftmaschine angeordneten Oxidationskatalysator und mit wenigstens einer hinter diesem angeordneten Vorrichtung zur selektiven katalytischen Reduktion der Abgase, **gekennzeichnet durch** eine in den wenigstens einen Oxidationskatalysator (4) integrierte Zuführeinrichtung (6) zur Zuführung eines Reduktionsmittels (61) in den Abgasstrom (32) der Brennkraftmaschine (2), wobei die Zuführeinrichtung eine Aussparung beziehungsweise eine Ausbohrung in dem Oxidationskatalysator umfasst, sodass das Reduktionsmittel in den Abgasstrom gelangen kann, ohne mit dem Oxidationskatalysator in Kontakt zu kommen, wobei im Falle der Verwendung eines Harnstoff enthaltenden Reduktionsmittels die beschleunigte Zersetzung des Harnstoffs der Aussparung bzw. Ausbohrung nachgelagert in der Vorrichtung zur selektiven katalytischen Reduktion erfolgt, wobei eine Eindüsestelle der Zuführeinrichtung motornah angeordnet ist.

2. Abgasreinigungsanlage nach Anspruch 1, **dadurch gekennzeichnet, dass** die Zuführeinrichtung (6) eine Düse (62) zur Zerstäubung des Reduktionsmittels (61) aufweist.

3. Abgasreinigungsanlage nach Anspruch 1 oder 2, **gekennzeichnet durch** eine der Zuführeinrichtung (6) nachgeordnete Mischvorrichtung (63) zur Verteilung des Reduktionsmittels (61) im Abgasstrom (32).

4. Abgasreinigungsanlage nach Anspruch 2 oder 3, **dadurch gekennzeichnet, dass** ein Austritt der Düse (62) ungefähr mittig im Oxidationskatalysator (4) angeordnet ist.

5. Abgasreinigungsanlage nach Anspruch 2 oder 3, **dadurch gekennzeichnet, dass** der Austritt der Düse (62) in einem äußeren Randbereich des Oxidationskatalysators (4) angeordnet ist.

6. Abgasreinigungsanlage nach einem der vorhergehenden Ansprüche, **dadurch gekennzeichnet, dass** der wenigstens eine Oxidationskatalysator (4) mit der darin integrierten Zuführeinrichtung (6) ein erstes Gehäuse (43) und dass die Vorrichtung zur selektiven katalytischen Reduktion (8) ein daran anschließendes zweites Gehäuse (81) aufweist.

7. Abgasreinigungsanlage nach einem der Ansprüche 1 bis 5, **dadurch gekennzeichnet, dass** der wenigstens eine Oxidationskatalysator (4) und die Vorrichtung zur selektiven katalytischen Reduktion (8) ein gemeinsames Gehäuse (10) aufweisen.

8. Abgasreinigungsanlage nach einem der vorhergehenden Ansprüche, **dadurch gekennzeichnet, dass** stromaufwärts des wenigstens einen Oxidationskatalysators (4) im Abgasstrom (32) der Brennkraftmaschine (2) wenigstens ein weiterer Oxidationskatalysator (41) angeordnet ist.

9. Abgasreinigungsanlage nach Anspruch 8, **dadurch gekennzeichnet, dass** der wenigstens eine weitere Oxidationskatalysator (41) in unmittelbarer Nähe der Brennräume der Brennkraftmaschine (2) angeordnet ist.

10. Abgasreinigungsanlage nach Anspruch 8 oder 9, **gekennzeichnet durch** jeweils wenigstens einen weiteren Oxidationskatalysator (41) an jedem Abgasauslass (29) jeden Brennraums der Brennkraftmaschine (2).

11. Verfahren zur Reinigung von Abgasen einer Brennkraftmaschine, insbesondere einer Brennkraftmaschine mit Selbstzündung und/ oder mit Kraftstoffdirekteinspritzung, bei dem ein Abgasstrom durch wenigstens einen im Abgaskanal angeordneten Oxidationskatalysator und wenigstens einer, diesem nachgeordneten Vorrichtung zur selektiven katalytischen Reduktion geleitet wird, **dadurch gekennzeichnet, dass** dem Abgasstrom (32) innerhalb des wenigstens einen Oxidationskatalysators (4) ein Reduktionsmittel (61) zugeführt wird, wobei die Zuführung **dadurch** innerhalb des Oxidationskatalysators erfolgt, dass das Reduktionsmittel über eine Aussparung beziehungsweise eine Ausbohrung in dem Oxidationskatalysator in den Abgasstrom gelangen kann, ohne mit dem Oxidationskatalysator in Kontakt zu kommen, wobei im Falle der Verwendung eines Harnstoff enthaltenden Reduktionsmittels die beschleunigte Zersetzung des Harnstoffs der Aussparung bzw. Ausbohrung nachgelagert in der Vorrichtung zur selektiven katalytischen Reduktion erfolgt, wobei eine Eindüsestelle der Zuführeinrichtung motornah angeordnet ist.

12. Verfahren nach Anspruch 11, **gekennzeichnet durch** eine Zuführung und/oder Zerstäubung des Reduktionsmittels (61) mittels einer Düse (62).

13. Verfahren nach Anspruch 11 oder 12, **gekennzeichnet durch** eine Zuführung des Reduktionsmittels (61) ungefähr mittig innerhalb des Oxidationskatalysators (4).

14. Verfahren nach Anspruch 11 oder 12, **gekennzeichnet durch** eine Zuführung des Reduktionsmittels (61) außermittig innerhalb des Oxidationskatalysators (4).

15. Verfahren nach einem der Ansprüche 11 bis 14, **dadurch gekennzeichnet, dass** der Abgasstrom (32) durch wenigstens einen weiteren Oxidationskatalysator (41) stromaufwärts des ersten Oxidationskatalysators (4) geleitet wird.

16. Verfahren nach einem der Ansprüche 11 bis 15, **dadurch gekennzeichnet, dass** der Abgasstrom (32) durch jeweils wenigstens einen weiteren Oxidationskatalysator (41) in jedem Abgaskanal (29) unmittelbar hinter den Brennräumen der Brennkraftmaschine (2) geleitet wird.

## Claims

1. Exhaust-gas purification system for purifying the exhaust gas from an internal combustion engine, in particular an internal combustion engine with compression ignition and/or with direct injection of fuel, having at least one oxidation catalytic converter arranged in an exhaust-gas duct of the internal combustion engine, and having at least one apparatus for the selective catalytic reduction of the exhaust gases arranged downstream of the oxidation catalytic converter, **characterized by** a feed device (6), which is integrated in the at least one oxidation catalytic converter (4), for feeding a reducing agent (61) into the exhaust-gas stream (32) of the internal combustion engine (2), the feed device comprising a cutout or drilled-out section in the oxidation catalytic converter, so that the reducing agent can pass into the exhaust-gas stream without coming into contact with the oxidation catalytic converter, wherein, in the case of a urea-containing reducing agent being used, the accelerated decomposition of the urea takes place, downstream of the cutout or drilled-out section, in the selective catalytic reduction apparatus, with an injection point of the feed device being arranged close to the engine.

2. Exhaust-gas purification system according to Claim 1, **characterized in that** the feed device (6) has a nozzle (62) for atomizing the reducing agent (61).

3. Exhaust-gas purification system according to Claim 1 or 2, **characterized by** a mixing apparatus (63) arranged downstream of the feed device (6) for distributing the reducing agent (61) within the exhaust-gas stream (32).

4. Exhaust-gas purification system according to Claim 2 or 3, **characterized in that** an outlet of the nozzle (62) is arranged approximately centrally in the oxidation catalytic converter (4).

5. Exhaust-gas purification system according to Claim 2 or 3, **characterized in that** the outlet of the nozzle (62) is arranged in an outer edge region of the oxidation catalytic converter (4).

6. Exhaust-gas purification system according to one of the preceding claims, **characterized in that** the at least one oxidation catalytic converter (4) with the feed device (6) integrated therein has a first housing (43), and **in that** the selective catalytic reduction apparatus (8) has a second housing (81) adjoining the first housing.

7. Exhaust-gas purification system according to one of Claims 1 to 5, **characterized in that** the at least one oxidation catalytic converter (4) and the selective catalytic reduction apparatus (8) have a common housing (10).

8. Exhaust-gas purification system according to one of the preceding claims, **characterized in that** at least one further oxidation catalytic converter (41) is arranged in the exhaust-gas stream (32) of the internal combustion engine (2) upstream of the at least one oxidation catalytic converter (4).

9. Exhaust-gas purification system according to Claim 8, **characterized in that** the at least one further oxidation catalytic converter (41) is arranged in the immediate vicinity of the combustion chambers of the internal combustion engine (2).

10. Exhaust-gas purification system according to Claim 8 or 9, **characterized by** in each case at least one further oxidation catalytic converter (41) at each exhaust-gas outlet (29) of each combustion chamber of the internal combustion engine (2).

11. Process for purifying exhaust gases from an internal combustion engine, in particular an internal combustion engine with compression ignition and/or with direct injection of fuel, in which an exhaust-gas stream is passed through at least one oxidation catalytic converter arranged in the exhaust-gas duct and at least one selective catalytic reduction apparatus arranged downstream of the oxidation catalytic converter, **characterized in that** a reducing agent (61) is fed to the exhaust-gas stream (32) within the at least one oxidation catalytic converter (4), the feeding taking place within the oxidation catalytic converter by virtue of the reducing agent being able to pass into the exhaust-gas stream via a cutout or drilled-out section in the oxidation catalytic converter without coming into contact with the oxidation catalytic converter, , wherein, in the case of a urea-containing reducing agent being used, the accelerated decomposition of the urea takes place, downstream of the cutout or drilled-out section, in the selective catalytic reduction apparatus, with an injection point of the feed device being arranged close to the engine.

12. Process according to Claim 11, **characterized by** feeding and/or atomization of the reducing agent (61) by means of a nozzle (62).

13. Process according to Claim 11 or 12, **characterized by** feeding of the reducing agent (61) approximately centrally within the oxidation catalytic converter (4).

14. Process according to Claim 11 or 12, **characterized by** feeding of the reducing agent (61) eccentrically within the oxidation catalytic converter (4).

15. Process according to one of Claims 11 to 14, **characterized in that** the exhaust-gas stream (32) is passed through at least one further oxidation catalytic converter (41) upstream of the first oxidation catalytic converter (4).

16. Process according to one of Claims 11 to 15, **characterized in that** the exhaust-gas stream (32) is passed through in each case at least one further oxidation catalytic converter (41) in each exhaust-gas duct (29) immediately downstream of the combustion chambers of the internal combustion engine (2).

## Revendications

1. Système d'épuration des gaz d'échappement qui épure les gaz d'échappement d'un moteur à combustion interne, en particulier d'un moteur à combustion interne à auto-allumage et/ou à injection directe de carburant,
qui présente au moins un catalyseur d'oxydation disposé dans un canal de gaz d'échappement du moteur à combustion interne et au moins un dispositif de réduction catalytique sélective des gaz d'échappement disposé en aval du catalyseur d'oxydation,
**caractérisé en ce que**
un dispositif d'amenée (6) est intégré dans le ou les catalyseurs d'oxydation (4) et amène un agent de réduction (61) dans l'écoulement (32) de gaz d'échappement du moteur à combustion interne (2),
**en ce que** le dispositif d'amenée comprend une découpe ou un alésage ménagés dans le catalyseur d'oxydation de telle sorte que l'agent de réduction puisse aboutir dans l'écoulement de gaz d'échappement sans entrer en contact avec le catalyseur d'oxydation,
**en ce qu'**au cas où l'on utilise un agent de réduction qui contient de l'urée, la décomposition accélérée de l'urée a lieu dans le dispositif de réduction catalytique sélective en aval de la découpe ou de l'alésage et
**en ce que** l'emplacement d'injection du dispositif d'amenée est disposé à proximité du moteur.

2. Système d'épuration des gaz d'échappement selon la revendication 1, **caractérisé en ce que** le dispositif d'amenée (6) présente une tuyère (62) de pulvérisation de l'agent de réduction.

3. Système d'épuration des gaz d'échappement selon les revendications 1 ou 2, **caractérisé par** un dispositif de mélange (63) disposé en aval du dispositif d'amenée (6) et destiné à répartir l'agent de réduction (61) dans l'écoulement (32) du gaz d'échappement.

4. Système d'épuration des gaz d'échappement selon les revendications 2 ou 3, **caractérisé en ce qu'**une sortie de la tuyère (62) est disposée sensiblement au milieu du catalyseur d'oxydation (4).

5. Système d'épuration des gaz d'échappement selon les revendications 2 ou 3, **caractérisé en ce que** la sortie de la tuyère (62) est disposée dans une bordure extérieure du catalyseur d'oxydation (4).

6. Système d'épuration des gaz d'échappement selon l'une des revendications précédentes, **caractérisé en ce que** le ou les catalyseurs d'oxydation (4) dans lesquels est intégré le dispositif d'amenée (6) présentent un premier boîtier (43) et **en ce que** le dispositif de réduction catalytique sélective (8) présente un deuxième boîtier (41) qui se raccorde au premier.

7. Système d'épuration des gaz d'échappement selon les revendications 1 à 5, **caractérisé en ce que** le ou les catalyseurs d'oxydation (4) et le dispositif de réduction catalytique sélective (8) présentent un boîtier (10) commun.

8. Système d'épuration des gaz d'échappement selon l'une des revendications précédentes, **caractérisé en ce qu'**au moins un autre catalyseur d'oxydation (41) est disposé en amont du ou des catalyseurs d'oxydation (4) dans l'écoulement (32) du gaz d'échappement du moteur à combustion interne (2).

9. Système d'épuration des gaz d'échappement selon la revendication 8, **caractérisé en ce que** le ou les autres catalyseurs d'oxydation (41) sont disposés à proximité immédiate des chambres de combustion du moteur à combustion interne (2).

10. Système d'épuration des gaz d'échappement selon les revendications 8 ou 9, **caractérisé par** la présence d'au moins un autre catalyseur d'oxydation (41) sur chaque orifice de sortie (29) de gaz d'échappement de chaque chambre de combustion du moteur à combustion interne (2).

11. Procédé d'épuration des gaz d'échappement d'un moteur à combustion interne, en particulier d'un moteur à combustion interne à auto-allumage et/ou doté d'une injection directe du carburant, dans lequel un écoulement de gaz d'échappement est amené à travers au moins un catalyseur d'oxydation disposé dans le canal de gaz d'échappement et au moins un dispositif de réduction catalytique sélective raccordé en aval du catalyseur d'oxydation,
**caractérisé en ce que**
un agent de réduction (61) est amené dans l'écoulement (32) du gaz d'échappement à l'intérieur du ou des catalyseurs d'oxydation (4), l'amenée s'effectuant à l'intérieur du catalyseur d'oxydation de telle sorte que l'agent de réduction puisse aboutir dans l'écoulement de gaz d'échappement par une découpe ou un alésage ménagés dans le catalyseur d'oxydation sans entrer en contact avec le catalyseur d'oxydation,
**en ce qu'**au cas où on utilise un agent de réduction qui contient de l'urée, la décomposition accélérée de l'urée a lieu dans le dispositif de réduction catalytique sélective en aval de la découpe ou de l'alésage et
**en ce que** l'emplacement d'injection du dispositif d'amenée est disposé à proximité du moteur.

12. Procédé selon la revendication 11, **caractérisé par** une amenée et/ou une pulvérisation de l'agent de réduction (61) au moyen d'une tuyère (62).

13. Procédé selon les revendications 11 ou 12, **caractérisé en ce que** l'amenée d'agent de réduction (61) s'effectue sensiblement au milieu du catalyseur d'oxydation (4).

14. Procédé selon les revendications 11 ou 12, **caractérisé en ce que** l'amenée de l'agent de réduction (61) s'effectue à distance du centre du catalyseur d'oxydation (4).

15. Procédé selon l'une des revendications 11 à 14,-**caractérisé en ce que** l'écoulement (32) de gaz d'échappement est passé dans au moins un autre catalyseur d'oxydation (41) situé en amont du premier catalyseur d'oxydation (4).

16. Procédé selon l'une des revendications 11 à 15, **caractérisé en ce que** l'écoulement (32) de gaz d'échappement est passé dans au moins un autre catalyseur d'oxydation (41) prévu dans chaque canal (29) de gaz d'échappement immédiatement en aval des chambres de combustion du moteur à combustion interne (2).
